# EUROPÄISCHE PATENTSCHRIFT

(11) **EP 2 185 372 B1**
(45) Veröffentlichungstag und Bekanntmachung des Hinweises auf die Patenterteilung: **02.03.2011**
(21) Anmeldenummer: 08785491.5
(22) Anmeldetag: 11.08.2008
(51) Int. Cl.: B60D 1/04

(54) **HAKENKUPPLUNG**
HOOK COUPLING
COUPLAGE PAR CROCHET

(30) Priorität: 13.08.2007 DE 102007038142
(43) Veröffentlichungstag der Anmeldung: 19.05.2010
(73) Patentinhaber: Jost-Werke GmbH, 63263 Neu-Isenburg (DE)
(72) Erfinder: SZCZEPANEK, Udo, 82223 Eichenau (DE)
(74) Vertreter: Trossin, Hans-Jürgen
(86) Internationale Anmeldenummer: PCT/EP2008/006611
(87) Internationale Veröffentlichungsnummer: WO 2009/021709

(56) Entgegenhaltungen:
- FR-A- 1 527 021
- US-A- 3 475 037
- US-A- 4 721 324
- US-A- 4 758 015
- US-A1- 2004 239 077

## Beschreibung

Die vorliegende Erfindung betrifft eine Hakenkupplung mit den Merkmalen des Oberbegriffs von Anspruch 1.

Aus der US 2004/0239077 A1 ist beispielsweise eine Hakenkupplung bekannt mit einem eine Einhaköffnung aufweisenden Hakenkörper und einer Verschlussklinke, welche verstellbar ist zwischen einer Offenstellung, in welcher die Einhaköffnung zumindest soweit offen ist, dass eine Zugöse an dem Hakenkörper zur Herstellung einer Formschlussverbindung mit diesem einhakbar ist, und einer Verschlussstellung, in welcher die Einhaköffnung zumindest soweit versperrt ist, dass eine an dem Hakenkörper eingehakte Zugöse zum Verbleib an diesem gesichert ist, wobei die Hakenkupplung weiter umfasst: einen Sperrhebel, welcher verlagerbar ist zwischen einer Sperrstellung, in welcher er eine Verstellung der Verschlussklinke von der Verschlussstellung zur Offenstellung hin sperrt, und einer Freigabestellung, in welcher er eine Verstellung der Verschlussklinke von der Verschlussstellung zur Offenstellung hin gestattet, sowie eine Auslöseeinrichtung, welche in ihrer Grundstellung dann, wenn der Sperrhebel sich in der Sperrstellung befindet, eine Verlagerung des Sperrhebels in die Freigabestellung hemmt, und welche bei Betätigung aus ihrer Grundstellung heraus eine Verlagerung des Sperrhebels in die Freigabestellung erlaubt. Bei dieser Hakenkupplung ist die Auslöseeinrichtung beweglich am Sperrhebel gelagert, wobei sich die Auslöseeinrichtung an der Verschlussklinke abstützt und so eine Bewegung des Sperrhebels aus der Sperrstellung zur Freigabestellung hin hemmt.

Nachteilig an der aus der US 2004/0239077 A1 bekannten Hakenkupplung ist zum einen die umständliche Bedienung, da zum Öffnen der Hakenkupplung, also zur Verstellung der Verschlussklinke in die Offenstellung, die Auslöseeinrichtung zunächst in einer ersten Richtung betätigt und der Sperrhebel in der derselben ersten Richtung bewegt werden muss, woraufhin nach der Verlagerung des Sperrhebels in die Freigabestellung die den Sperrhebel lagernde Verschlussklinke in die entgegengesetzte Richtung zur Offenstellung hin verstellt werden muss.

Darüber hinaus erscheint die aus der US 2004/0239007 A1 bekannte Hakenkupplung in ihrer Betriebssicherheit verbesserungswürdig. Dann nämlich, wenn eine den Sperrhebel zum Verschwenken lagernde Schwenkwelle brechen sollte, kann sich der Sperrhebel ohne weiteres aus seiner Sperrstellung herausbewegen und seine Sperrwirkung einbüßen.

Eine Hakenkupplung mit den Merkmalen des Oberbegriffs von Anspruch 1 ist aus der Druckschrift US 3,475,037 A bekannt.

Diese Druckschrift offenbart eine vereinfachte Betätigbarkeit der Hakenkupplung bei erhöhter Betriebssicherkeit, indem die Auslöseeinrichtung ein am Hakenkörper beweglich gelagertes Auslösebauteil aufweist, welches schwenkbar ist zwischen der Grundstellung und einer Auslösestellung, in welcher es die Verlagerung des Sperrhebels in die Freigabestellung erlaubt.

Dabei ist das Auslösebauteil zur einfachen Bewegung verschwenkbar am Hakenkörper vorgesehen. Dabei ist das Auslösebauteil von der Grundstellung in die Auslösestellung verschwenkbar.

Zur Sicherstellung einer möglichst einfachen aber robusten Bewegbarkeit des Sperrhebels ist auch dieser zwischen der Sperrstellung und der Freigabestellung schwenkbar ausgebildet.

Die Aufgabe der vorliegenden Erfindung besteht in einer Erhöhung der Betriebssicherheit, insbesondere im Hinblick auf die Sicherheit der Verriegelung.

Diese Aufgabe wird gelöst, indem bei einer gattungsgemäßen Hakenkupplung der Sperrhebel und das Auslösebauteil gegensinnig verschwenkbar sind.

Die in dieser Anmeldung genannten Stellungen einzelner Bauteile der Hakenkupplung sind häufig dadurch gekenntzeichnet, dass sie eine Bewegung desselben oder eines anderen Bauteils gestatten oder hemmen. Dabei ist "Stellung" nicht als eindeutig definierte oder gar verrastbare Stellung zu verstehen, sondern ist definitionsgemäß lediglich hinsichtlich ihrer Eigenschaft zu beurteilen, ob sie die definitionsgemäß bezeichnete Bewegung des ebenfalls bezeichneten Bauteils gestattet oder hemmt.

Bevorzugt ist das Auslösebauteil am Hakenkörper beweglich gelagert, da der Hakenkörper als massives Bauteil selbst hohe Kräfte problemlos auf nehmen kann.

Zur Erhöhung der Betriebssicherheit der Hakenkupplung kann vorgesehen sein, dass das Auslösebauteil durch Krafteinwirkung in die Grundstellung vorgespannt ist. Dadurch wird eine Bewegung des Auslösebauteils in die den Kupplungszustand der Hakenkupplung sichernde Grundstellung zumindest unterstützt oder sogar selbsttätig eingeleitet.

Hierzu kann die Hakenkupplung aus konstruktiver Sicht wenigstens eine Auslösehebel-Vorspannfeder umfassen, welche einenends am Auslösebauteil und andernends an einem Bauteil aus Sperrhebel, Hakenkörper oder Verschlussklinke, vorzugsweise an der Verschlussklinke abgestützt ist.

Vorzugsweise ist die Auslösebauteil-Vorspannfeder an der Verschlussklinke abgestützt, da sie dann gemeinsam mit der Verschlussklinke bewegt wird und so die Einhaköffnung nicht stört.

Je nach der benötigten Vorspannkraft können auch zwei oder mehr Auslösebauteil-Vorspannfedern vorgesehen sein.

Zur weiteren Erhöhung der Betriebssicherheit kann daran gedacht sein, dass das Auslösebauteil nur dann in seine Grundstellung bewegbar ist, wenn sich der Sperrhebel in der Sperrstellung befindet.

Vorteilhafterweise ist der Sperrhebel schwenkbar in der Verschlussklinke gelagert, so dass er dann sicher in seine Sperrstellung verbracht werden kann, wenn sich die Verschlussklinke in ihrer Verschlussstellung befindet.

Wie weiter unten ausgeführt werden wird, ist es aus mehrerlei Hinsicht vorteilhaft, dass der Sperrhebel und das Auslösebauteil erfindungsgemäß gegensinnig verschwenkbar sind. Vorteilhafterweise können der Sperrhebel und das Auslösebauteil unabhängig vom jeweiligen Drehsinn zur Verringerung des benötigten Bauraums um eine Sperrhebel-Schwenkachse und eine zu dieser parallele Auslösebauteil-Schwenkachse schwenkbar sein.

Zur besonders sicheren mechanischen Verriegelung des Sperrhebels in dessen Sperrstellung kann konstruktiv vorgesehen sein, dass das Auslösebauteil einen Verriegelungsabschnitt aufweist, welcher in der Grundstellung des Auslösebauteils zur Erzielung eines Formschlusses in Gegenüberstellung zu oder in Anlage an einem Verriegeiungsgegenabschnitt des Sperrhebels angeordnet ist. Verstellt man dann das Auslösebauteil in die Auslösestellung, so befindet sich der Verriegelungsabschnitt dann vom Verriegelungsgegenabschnitt entfernt, so dass der Verriegelungsabschnitt den Verriegelungsgegenabschnitt nicht mehr formschlüssig an seiner Bewegung hindert.

Eine besonders hohe Betriebssicherheit der Hakenkupplung gegen ihr unerwünschtes Öffnen kann dadurch erreicht werden, dass in der Grundstellung des Auslösebauteils eine Selbsthemmung zwischen Sperrhebel und Auslösebauteil derart erreicht ist, dass eine Bewegung des Sperrhebels von der Sperrstellung zur Freigabestellung hin keine Bewegung des Auslösebauteils von der Grundstellung zur Auslösestellung hin bewirkt. Diese gewünschte Selbsthemmung kann bei der oben genannten gegensinnigen Verschwenkbarkeit von Auslösebauteil und Sperrhebel besonders einfach realisiert werden.

Wenn, wie oben bereits angedeutet wurde, die Lagerung des Sperrhebels versagt, etwa durch Brechen einer Schwenkwelle oder -achse des Sperrhebels, kann dennoch eine gewünschte Sperrwirkung des Sperrhebels bei geschlossener Hakenkupplung (Verschlussklinke befindet sich in der Verschlussstellung) sichergestellt werden, wenn der Sperrhebel an seinem Sperrhebel-schwenkachsennäheren Längsende teilrotationssymmetrisch bezüglich der Sperrhebel-Schwenkachse ausgeführt ist und dieses Längsende von einer im Wesentlichen komplementären Ausnehmung in dem den Sperrhebel lagernden Bauteil über einen vorbestimmten Winkelbereich hinweg umgeben ist. Dabei kann das Sperrhebelschwenkachsennähere Längsende des Sperrhebels teilzylindrisch, teilsphärisch, teilkonisch und dergleichen ausgebildet sein. Die komplementäre Ausnehmung befindet sich vorzugsweise nahe an der zu ihr hin weisenden Begrenzungsfläche des teilrotationssymmetrischen Längsendes, vorzugsweise unter Bildung eines Spalts von sehr geringer Spaltbreite, etwa von 0,5 bis 2,5 mm.

Der Umschlingungswinkel, über welchen hinweg die komplementäre Ausnehmung das teilrotationssymmetrische Längsende umgibt, sollte so gewählt sein, dass die Umschlingung die gewünschte Bewegbarkeit des Sperrhebels nicht beeinträchtigt. Da jedoch ein verschwenkbarer Sperrhebel zwischen seiner Sperrstellung und seiner Freigabestellung nur um wenige Winkelgrad verschwenkt werden muss, kann zur Sicherstellung der gewünschten Sperrwirkung auch bei etwa gebrochener Sperrhebel-Schwenkachse oder -welle ein Umschlingungswinkel von 140° bis 180°, vorzugsweise von 160°s bis 180° gewählt sein. Auch Umschlingungswinkel von mehr als 180° sind bei entsprechender konstruktiver Ausgestaltung des Sperrhebels denkbar.

Zur sicheren gewünschten Verlagerung des Sperrhebels von dessen Sperrstellung in dessen Freigabestellung bei gleichzeitig sehr einfacher Bedienbarkeit kann vorgesehen sein, dass das Auslösebauteil eine Mitnehmereinrichtung aufweist, welche zumindest während eines Abschnitts einer Verschwenkbewegung des Auslösebauteils von der Grundstellung weg den Sperrhebel von der Sperrstellung in Richtung zur Freigabestellung hin mitnimmt. Vorzugsweise ist die Mitnehmereinrichtung derart ausgebildet und am Auslösebauteil vorgesehen, dass der Sperrhebel durch das Auslösebauteil vermittels der Mitnehmereinrichtung von der Sperrstellung in die Freigabestellung verlagerbar ist.

Zur Verringerung der Anzahl an Bauteilen, welche zur Bildung der hier diskutierten Hakenkupplung notwendig sind, kann vorgesehen sein, dass die Mitnehmereinrichtung als auslösebauteilseitiges Vorspannfederlager dient.

Zur Sicherstellung der Verlagerung des Sperrhebels von dessen Sperrstellung zu seiner Freigabestellung hin kann konstruktiv vorgesehen sein, dass die Mitnehmereinrichtung eine Gleitfläche aufweist, welche zumindest während eines Abschnitts der Verschwenkbewegung des Auslösebauteils von der Grundstellung in die Auslösestellung in Gleitanlageeingriff an eine Anlagekontur des Sperrhebels gelangt. Ein derartiger Gleitanlageeingriff kann ohne zusätzliche Bauteile in sehr einfacher Weise realisiert sein.

Grundsätzlich kann vorgesehen sein, dass die Verschlussklinke beliebig zwischen ihrer Verschlussstellung und ihrer Offenstellung bewegbar ist. Vorzugsweise ist jedoch auch die Verschlussklinke schwenkbar am Hakenkörper oder an einem mit diesem starr verbundenen Bauteil vorgesehen. Dabei kann die Anzahl an zur Herstellung der Hakenkupplung benötigten Bauteilen gering gehalten werden, wenn die Verschlussklinke und das Auslösebauteil um eine gemeinsame Schwenkachse schwenkbar sind. Ist dies nicht der Fall, kann die Hakenkupplung selbst bei geringem Bauraum realisiert sein, wenn die Verschlussklinken-Schwenkachse, die Sperrhebel-Schwenkachse und die Auslösebauteil-Schwenkachse zueinander parallel sind.

Zur Erhöhung der Betriebssicherheit kann der Sperrhebel zur Sperrstellung hin vorgespannt sein.

Weiterhin kann der Sperrhebel eine Rastkontur aufweisen, welche dazu ausgebildet ist, mit einer am Hakenkörper ausgebildeten Gegenrastkontur zu verrasten, wenn die Verschlussklinke ihre Offenstellung erreicht. Dadurch kann die Verschlussklinke in vorteilhafter Weise ohne zusätzliche Bauteile in ihrer Offenstellung gehalten werden. Vorzugsweise ist die Rastkontur derart am Sperrhebel vorgesehen, dass die auf den Sperrhebel wirkende Vorspannkraft, die ihn zur Sperrstellung hin vorspannt, auch zur Sicherstellung der Verrastung, insbesondere überwindbaren Verrastung, genutzt werden kann.

Zur besonders einfachen Betätigung der Verschlussklinke durch das Auslösebauteil sind diese vorteilhafterweise derart vorgesehen, dass das Auslösebauteil bei seiner Betätigung von der Grundstellung in die Auslösestellung und ggf. darüber hinaus im gleichen Drehsinn verschwenkt wird wie die Verschlussklinke bei ihrer Verstellung von der Verschlussstellung in die Offenstellung.

Durch die oben beschriebene Mitnehmervorrichtung kann die Verschlussklinke lediglich durch einhändigen Betätigungsangriff an dem Auslösebauteil von ihrer Verschlussstellung in ihre Offenstellung verschwenkt werden, wenn die Verschlussklinke einen mechanischen Anschlag umfasst, welcher den Verlagerungsbereich des Sperrhebels nahe der Freigabestellung gegen eine Bewegung von der Sperrstellung weg begrenzt.

In diesem Falle wird zunächst das Auslösebauteil aus seiner Grundstellung in seine Auslösestellung verbracht, so dass der Sperrhebel nicht länger in dessen Sperrstellung festgelegt ist. Dann wird der Auslösehebel über die Auslösestellung hinaus von der Grundstellung weg bewegt, bis die Mitnehmereinrichtung in den oben beschriebenen Gleitanlageeingriff mit der Anlagekontur des Sperrhebels gelangt ist. Bewegt man ausgehend von diesem Zustand den Auslösehebel noch weiter von der Grundstellung weg, so wird der Sperrhebel durch die Mitnehmereinrichtung mitgenommen und während der Bewegung des Auslösebauteils aus seiner Sperrstellung in seine Freigabestellung verbracht.

Bewegt man das Auslösebauteil schließlich so weit, bis der Sperrhebel an dem gerade erwähnten mechanischen Anschlag zur Anlage kommt, so verspannen sich Verschlussklinke, Sperrhebel und Auslösebauteil gegeneinander, so dass bei noch einer weiteren Bewegung des Auslösebauteils von der Grundstellung weg die Verschlussklinke als Ganzes gleichsinnig mit dem Auslösebauteil verschwenkt wird.

Gegen ein übermäßiges Öffnen bei gleichzeitigem Schutz einer für den Sperrhebel zur Sicherstellung von dessen Sperrwirkung vorgesehenen Gegenanschlagfläche des Hakenkörpers kann vorgesehen sein, dass die Gegenanschlagfläche des Hakenkörpers, mit welcher eine Anschlagfläche des Sperrhebels in dessen Sperrstellung in Anlageeingriff gelangt, auch zur Anlage eines Anlageabschnitts der Verschlussklinke daran ausgebildet ist, und zwar derart, dass die Gegenanschlagfläche die Verstellbarkeit der Verschlussklinke nahe der Offenstellung in Richtung von der Verschlussstellung weg begrenzt.

Die vorliegende Erfindung wird im Folgenden anhand eines Ausführungsbeispiels näher erläutert werden. Es stellt dar:
- Fig. 1: eine Draufsicht auf eine erfindungsgemäße erste Ausführungs- form einer Hakenkupplung,
- Fig. 2: eine Teilschnittansicht der Hakenkupplung von Fig. 1 mit der Verschlussklinke in der Verschlussstellung,
- Fig. 3: eine Teilschnittansicht der Hakenkupplung der Fig. 1 und 2 bei Beginn eines Öffnungsvorgangs zum Öffnen der Hakenkupp- lung,
- Fig. 4: die Hakenkupplung der Fig. 1 bis 3 mit fortgeschrittener Öff- nungsbetätigung,
- Fig. 5: die Hakenkupplung der Fig. 1 bis 4 mit der Verschlussklinke in der Offenstellung,
- Fig.6: eine der Fig. 2 entsprechende Teilschnittansicht eines vergleichsbeispiels einer Hakenkupp- lung,
- Fig. 7: eine Teilschnittansicht der Hakenkupplung von Fig. 6 bei Beginn eines Öffnungsvorgangs zum Öffnen der Hakenkupplung,
- Fig. 8: die Hakenkupplung der Fig. 6 und 7 mit maximal von seiner Grundstellung entferntem Auslösebauteil,
- Fig. 9: die Hakenkupplung der Fig. 6 bis 8, wobei die Verschlussklinke sich zwischen ihrer Verschlussstellung und ihrer Offenstellung befindet, und
- Fig. 10: die Hakenkupplung der Fig. 6 bis 9 mit der Verschlussklinke in der Offenstellung.

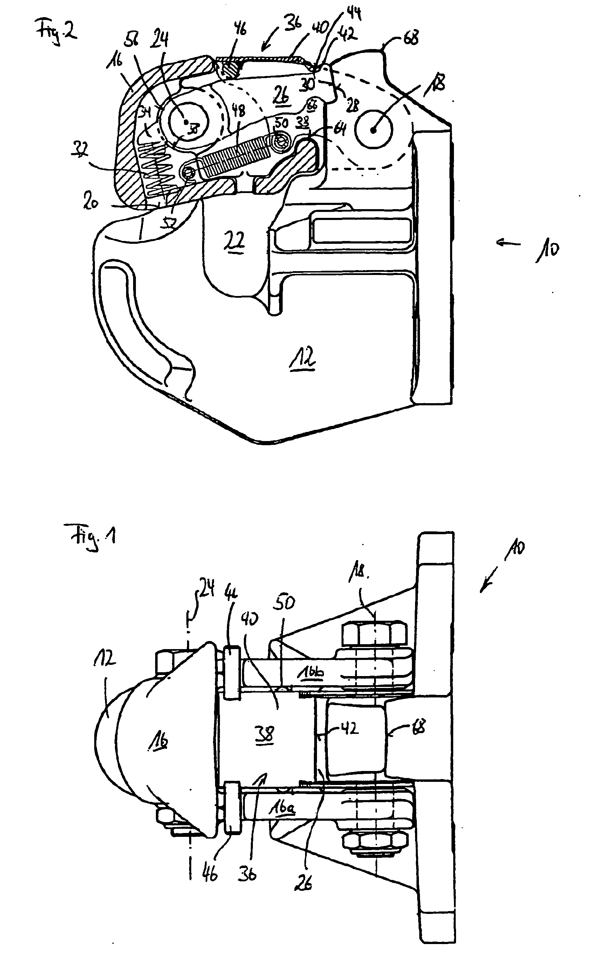

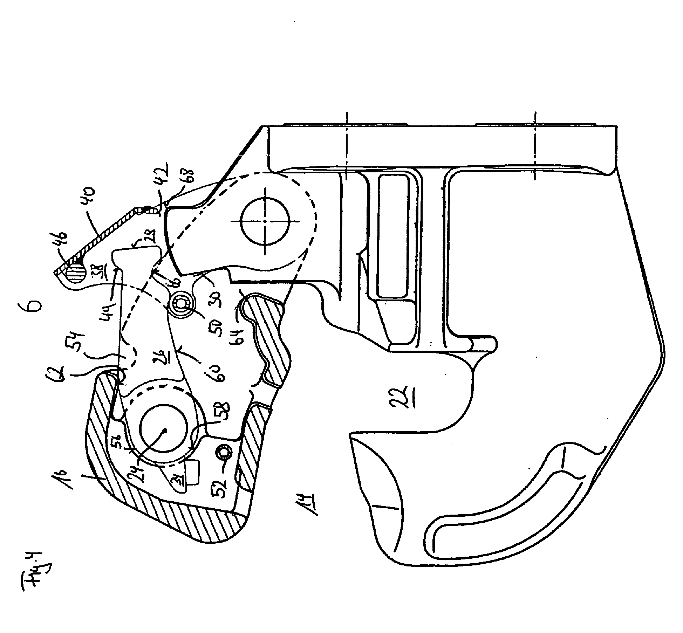

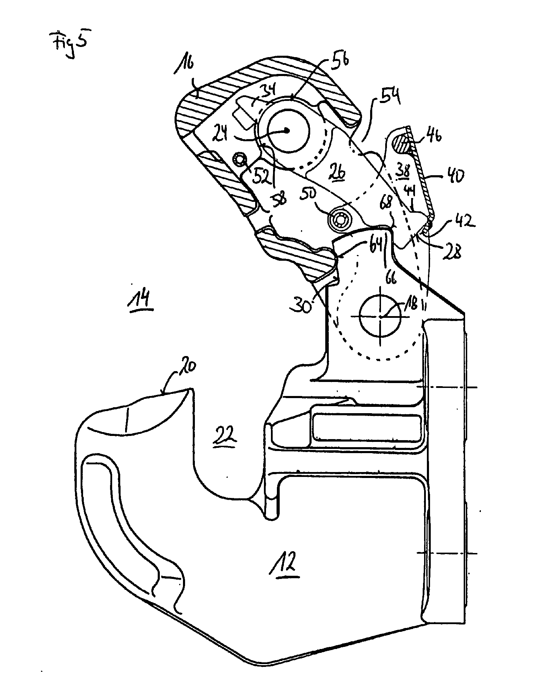

In den Fig. 1 bis 5 ist eine erfindungsgemäße Hakenkupplung allgemein mit 10 bezeichnet. Sie umfasst einen Hakenkörper 12 mit einer Einhaköffnung 14 (siehe Fig. 4 und 5) und mit einer schwenkbar am Hakenkörper angelenkten Verschlussklinke 16. Genauer ist die Verschlussklinke 16 um eine Verschlussklinken-Schwenkachse 18 schwenkbar am Hakenkörper 12 vorgesehen.

In der in Fg. 2 dargestellten Verschlussstellung der Verschlussklinke 16, in welcher diese auf einer Auflagefläche 20 des Hakenkörpers 12 aufliegt und somit die Einhaköffnung 14 verschließt, definieren Hakenkörper 12 und Verschlussklinke 16 eine Durchgangsöffnung 22, in welcher eine Zugöse eines Nachlauffahrzeugs aufgenommen sein kann.

An der Verschlussklinke 16 ist um eine zur Verschlussklinken-Schwenkachse 18 parallele Sperrhebel-Schwenkachse 24 ein Sperrhebel 26 schwenkbar angelenkt.

Wie in Fig. 2 dargestellt ist, befindet sich der Sperrhebel 26 in seiner Sperrstellung, d. h. eine stirnseitige Anschlagfläche 28 befindet sich in Anlage an einer Gegenanschlagfläche 30 des Hakenkörpers. Dadurch kann die Verschlusslkinke 16 nicht aus ihrer in Fig. 2 gezeigten Verschlussstellung im Uhrzeigersinn verschwenkt werden.

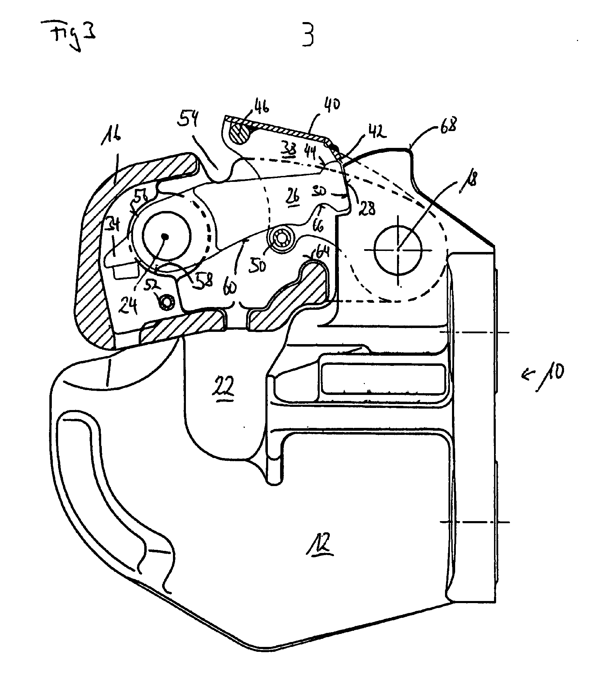

Der Sperrhebel 26 ist durch eine Druckfeder 32, welche zwischen die Verschlussklinke 16 und einen Spannfortsatz 34 des Sperrhebels 26 gespannt ist, in die in Fig. 2 gezeigte Sperrstellung vorgespannt. Der Übersichtlichkeit halber ist die Druckfeder 32 nur in Fig. 2 dargestellt und in den Fig. 3 bis 5 weggelassen.

Weiterhin umfasst die Hakenkupplung 10 eine an dem Hakenkörper 12 um die Schwenkachse 18 verschwenkbare Auslöseeinrichtung 36. Diese umfasst ein hebelartiges Auslösebauteil 38. In Fig. 2 ist das Auslösebauteil 38 in seiner Grundstellung gezeigt, in welcher es eine Bewegung des Sperrhebels 26 aus dessen Sperrstellung hemmt.

Hierzu weist das Auslösebauteil 38 in einem Deckelteil 40 einen Verriegelungsabschnitt 42 auf, welcher in Gegenüberstellung zu einem Verriegelungsgegenabschnitt 44 des Sperrhebels 26 angeordnet ist. Der Verriegelungsgegenabschnitt 44 ist einer Einhüllenden mit Abstand folgend nachgebildet, welche durch den Verriegelungsabschnitt 44 bei Verschwenken des Auslösebauteils 38 von der Grundstellung in die Auslösestellung erzeugt wird.

Zur einfachen Handbetätigung weist die Auslöseeinrichtung 36 Handgriffe 46 auf, welche in Seitenrichtung abstehen.

Zur Erhöhung der Betriebssicherheit ist das Anlagebauteil 38 durch eine Zugfeder 48 in die in Fig. 2 gezeigte Grundstellung vorgespannt. Die Zugfeder ist auslösebauteilseitig an einer das Auslösebauteil 38 durchsetzenden Stange 50 festgelegt und ist mit ihrem anderen Längsende an einem verschlussklinkenfesten Federwiderlager 52 festgelegt. Auch die Zugfeder 48 ist der Übersichtlichkeit halber lediglich in der Fig. 2 dargestellt und in den Fig. 3 bis 5 weggelassen.

Für die Aufnahme der Handgriffe 46 sind an den Seitenschenkeln 16a und 16b der Verschlussklinke 16 Vertiefungen 54 vorgesehen (siehe insbesondere Fig. 3 bis 5).

Wie in den Fig. 2 bis 5 zu erkennen ist, ist das Sperrhebel-schwenkachsennahe Längsende des Sperrhebels 26 als Teilzylinder ausgebildet, wobei die Zylinderachse des Teilzylinders mit der Sperrhebel-Schwenkachse 24 zusammenfällt.

In der Verschlussklinke ist mit geringem Spaltabstand von der teilzylindrischen Ausbildung 56 des Sperrhebels 26 eine ebenfalls teilzylindrische Ausnehmung 58 ausgebildet, welche die teilzylindrische Ausbildung 56 des Sperrhebels 26 über einen Winkel von ca. 170° umgibt. Das Spaltmaß zwischen der teilzylindrischen Ausbildung 56 des Sperrhebels 26 und der teilzylindrischen Ausnehmung 58 in der Verschlussklinke beträgt zwischen ca. 0,5 und 2,5 mm.

Falls die Schwenklagerung des Sperrhebels 26 brechen sollte, hält die teilzylindrische Ausnehmung 58 der Verschlussklinke 16 den Sperrhebel 26 etwa in dessen in Fig. 2 gezeigter Sperrstellung, so dass selbst bei gebrochener Schwenkachse oder Schwenkwelle des Sperrhebels 26 die gewünschte Sperrwirkung des Sperrhebels 26 erhalten bleibt.

Anhand der Fig. 2 bis 5 wird im Folgenden ein Vorgang zum Öffnen der Hakenkupplung 10 erläutert.

Hierzu werden ausgehend von der in Fig. 2 gezeigten geschlossenen Stellung der Hakenkupplung 10 die Handgriffe 46 des Auslösebauteils 38 gegriffen und das Auslösebauteil 38 in Fig. 2 im Uhrzeigersinn verschwenkt. Dabei wird die in Fig. 3 gezeigte Stellung erreicht. Hier hat das Auslösebauteil 38 seine Auslösestellung bereits überschritten, in welcher der Sperrhebel 26 nicht länger durch den Verriegelungsabschnitt 42 festgelegt ist. Vielmehr ist die Stange 50, welche neben einem Federwiderlager für die Zugfeder 48 auch als Mitnehmereinrichtung dient, in Gleitanlageeingriff mit einer Anlagekontur 60 des Sperrhebels 26 gelangt (siehe insbesondere Fig. 3 und 4). Durch diesen Gleitanlageeingriff wurde der Sperrhebel 26 verglichen mit seiner Sperrstellung in Fig. 2 geringfügig angehoben, wobei er immer noch Sperrwirkung entfaltet, da seine Anschiagfiäche 28 an der Gegenanschlagfläche 30 des Hakenkörpers 12 anliegt.

Wird das Auslösebauteil 38 ausgehend von Fig. 3 weiter im Uhrzeigersinn verschwenkt, so wird der Sperrhebel 26 durch den Gegenanlageeingriff der Stange 50 an der Anlagekontur 60 weiter im Gegenuhrzeigersinn verschwenkt, bis er an einen mechanischen Anschlag 62 (siehe Fig. 4) an der Verschlussklinke 16 gelangt. Ab der Anlage des Sperrhebels 26 an dem mechanischen Anschlag 62 sind bei weiterer Schwenkbewegung des Auslösebauteils 38 im Uhrzeigersinn die Verschlussklinke 16 der Sperrhebel 26 und das Auslösebauteil 38 derart gegeneinander verspannt, dass eine Schwenkbewegung des Auslösebauteils 38 im Uhrzeigersinn zu einer Schwenkbewegung der Verschlussklinke 16 im Uhrzeigersinn führt (siehe Fig. 4), so dass die Einhaköffnung 14 allmählich freigegeben wird.

In Fig. 5 ist die Verschlussklinke 16 in ihrer Offenstellung dargestellt, wobei ein Anlageabschnitt 64 der Verschlussklinke 16 an der Gegenanschlagfläche 30 des Hakenkörpers 12 anliegt, so dass eine Zugöse zur Ankupplung an den Hakenkörper 12 die Gegenanschlagfläche 30 nicht erreichen und nicht beschädigen kann.

Gleichzeitig ist der Sperrhebel 26 mit einer Rastausnehmung 66 an einer Rastgegengeometrie 68 des Hakenkörpers unter der Wirkung der Druckfeder 32 überwindbar verrastet.

Ausgehend von der in Fig. 5 gezeigten Stellung kann die Verschlussklinke 16 durch Drücken in Gegenuhrzeigersinnrichtung unter Lösen der überwindbaren Verrastung zwischen Sperrhebel 26 und Hakenkörper 12 zurück in die in Fig. 2 gezeigte Verschlussstellung bewegt werden. Aufgrund der oben dargestellten Vorspannungen der einzelnen Bauteile verriegelt die Verschlussklinke 16 in ihrer Verschlussstellung automatisch gegen ein erneutes Öffnen.

Die Öffnungsbetätigung der Verschlussklinke 16 kann, wie oben erläutert wurde, mit einer Hand ausgeführt werden.

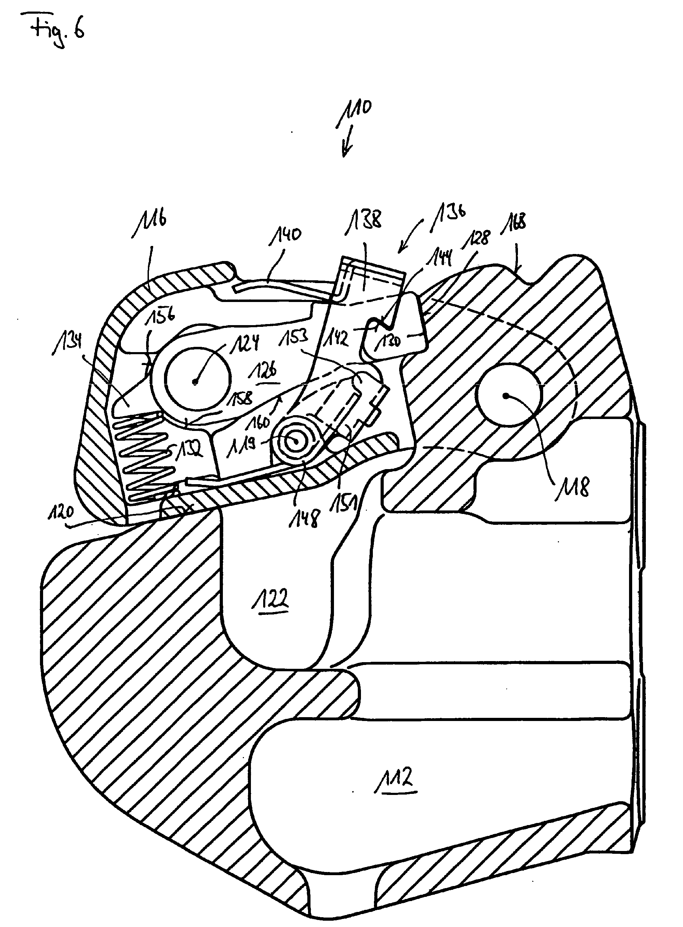

In den Fig. 6 bis 10 ist ein Vergleichsbeispiel einer Hakenkupplung gezeigt. Gleiche oder funktionsgleiche Bauteile des Vergleichsbeispiels sind mit den gleichen Bezugszeichen bezeichnet wie entsprechende Bauteile der ersten Ausführungsform, jedoch erhöht um die Zahl 100. Das Vergleichsbeispiel wird im Folgenden nur insofern beschrieben werden, als es sich von der ersten Ausführungsform unterschneidet.

Der wesentlichste Unterschied zu der ersten Ausführungsform liegt darin, dass das Auslösebauteil 138 im Vergleichsbeispiel um eine Auslösebauteil-Schwenkachse 119 schwenkbar an der Verschlussklinke 116 angelenkt ist. Darüber hinaus ist das Auslösebauteil 136 nicht wie in der ersten Ausführungsform im Uhrzeigersinn, sondern im Gegenuhrzeigersinn aus der in Fig. 6 gezeigten Grundstellung in eine den Sperrhebel 126 zur Bewegung aus der Sperrstellung freigebenden Auslösestellung bewegbar.

Das Auslösebauteil 138 ist durch eine Torsionsfeder 148 in die in Fig. 6 gezeigte Grundstellung vorgespannt. Ein Endschenkel der Torsionsfeder 148 stützt sich dabei auf einem starr mit dem Auslösebauteil 136 verbundenen Kunststoffpuffer 151 auf, während ein anderer, entgegegengesetzter Endschenkel der Torsionsfeder 148 sich an der Verschlussklinke 116 abstützt.

Der Kunststoffpuffer 151 weist eine Wulst 153 auf, welche als Mitnehmereinrichtung dient und, wie bei der ersten Ausführungsform, in der Grundstellung des Auslösebauteils 138 mit Abstand von einer Anlagekontur 160 des Sperrhebels 126 angeordnet, beim Verschwenken des Auslösebauteils 138 aus der Grundstellung über die Auslösestellung hinaus jedoch in Anlageeingriff an die Anlagekontur 160 gelangt, und somit den Sperrhebel 126 bei fortgesetzter Schwenkbewegung des Auslösebauteils 138 im Gegenuhrzeigersinn aus der Sperrstellung in Richtung zur Freigabestellung hin verschwenkt.

Ein Deckelteil 140 des Auslösebauteils 138 ist mit einer Stufe zur Schwenkachse 119 des Auslösebauteils 138 hin ausgebildet.

Ein freies Längsende des Deckelteils 140 ist als verlängerte Abdeckung ausgebildet, welche Schmutzeintritt in die Verschlussklinke verhindern soll.

Auf der zum Deckelteil 140 hin weisenden Oberseite des Sperrhebels 126 ist eine mit der radialen Stufe des Deckelteils 140 wechselwirkende Stufenausbildung 145 ausgebildet, welche dafür sorgt, dass der Schwenkhebel 126 erst dann im Gegenuhrzeigersinn aus der Sperrstellung verschwenkbar ist, wenn die radiale Stufe des Deckelteils 140 die Stufenausbildung 145 des Sperrhebels 126 passiert hat.

Der Verriegelungsabschnitt 142 des Auslösebauteils 138 ist hakenförmig ausgebildet, wobei die Eingriffsfläche 142a des Verriegelungsabschnitts 142 eine teilzylindrische Umfangsfläche mit der Auslösebauteil-Schwenkachse 119 als Mittelachse ist. Gleiches gilt für die Verriegelungsgegenabschnittsfläche 144a des Verriegelungsgegenabschnitts 144 des Sperrhebels 126, welche in der Grundstellung des Auslösebauteils 138 in Gegenüberstellung zur Verriegelungsabschnittsfläche 142a sich befindet

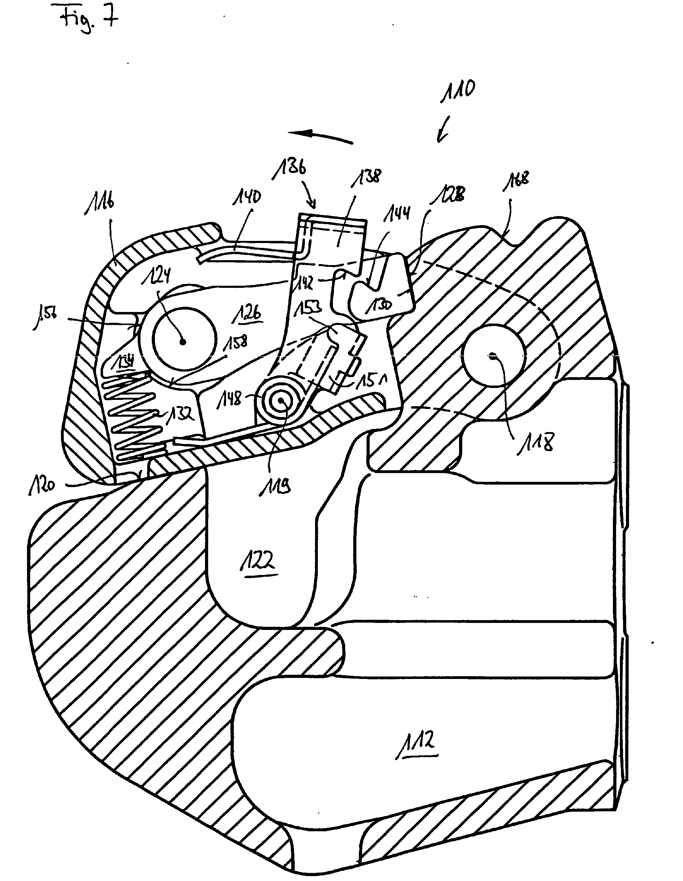

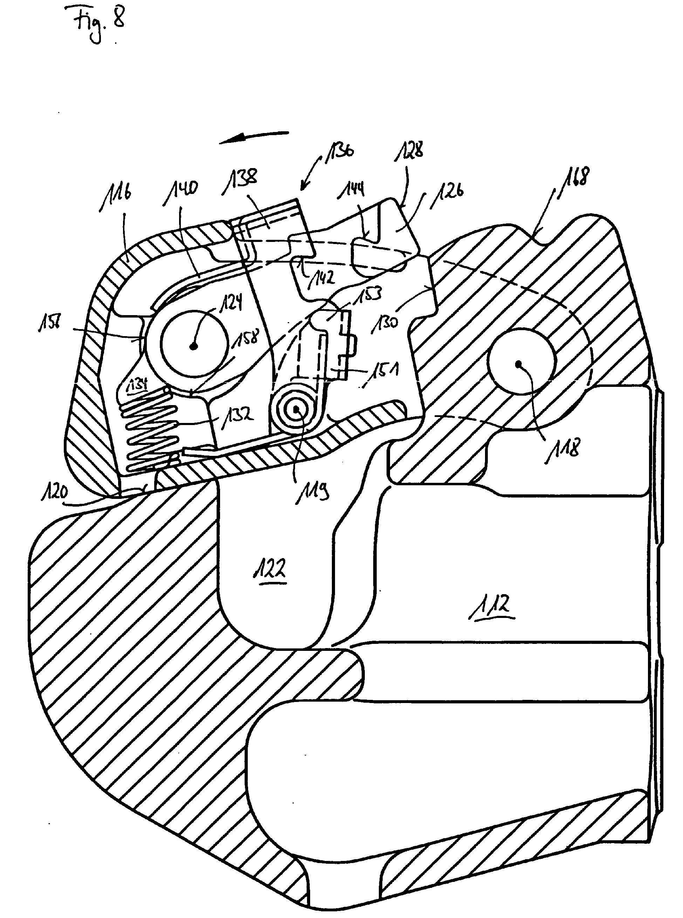

Möchte man die Verschlussklinke 116 aus der in Fig. 6 gezeigten Verschlussstellung in die Offenstellung bewegen, so ist zunächst das Auslösebauteil 138 im Gegenuhrzeigersinn zu verschwenken, bis der Sperrhebel 126 durch die Mitnehmerwulst 153 in die Freigabestellung bewegt wird (siehe hierzu Fig. 7 und 8).

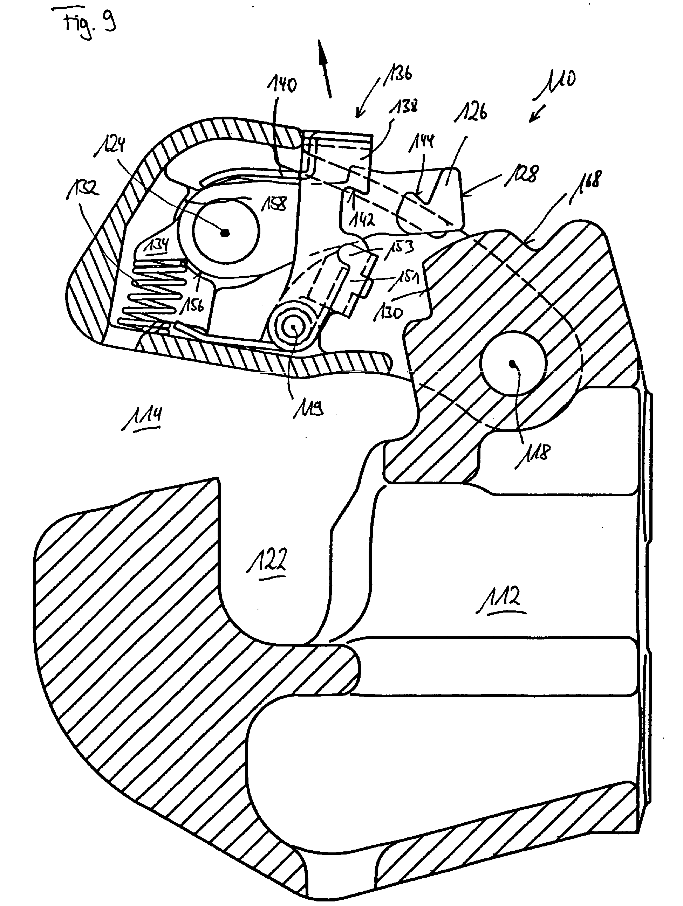

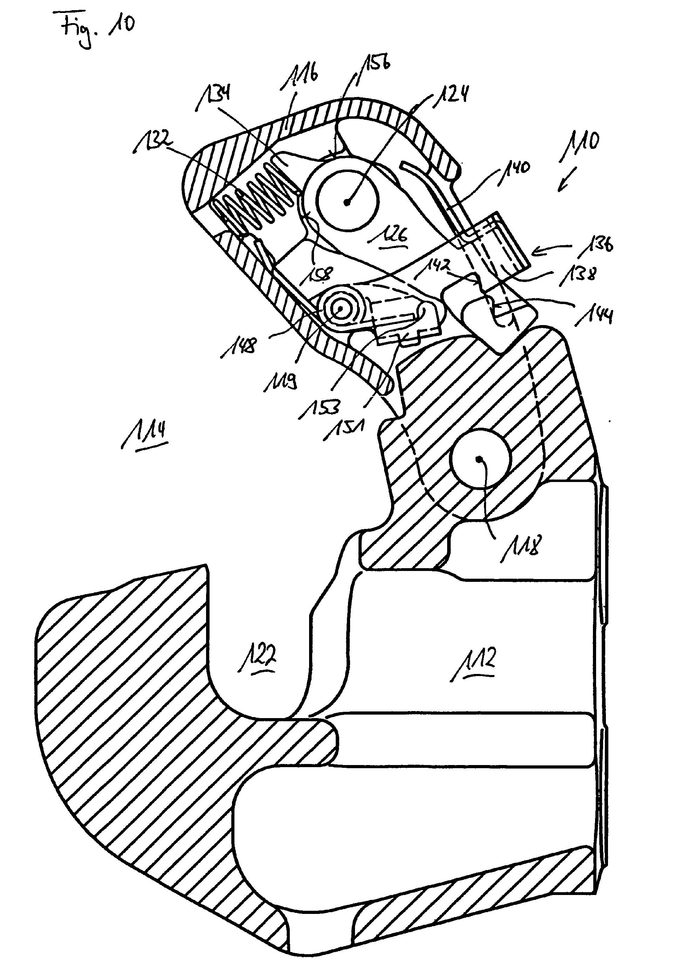

Dann kann die Verschlussklinke 116 einfach im Uhrzeigersinn aus der Geschlossenstellung in die Offenstellung bewegt werden (siehe Fig. 9 und 10).

Sowohl bei der ersten Ausführungsform als auch dem Vergleichsbeispiel ist die Grundstellung für das jeweilige Auslösebauteil nur dann erreichbar, wenn sich der Sperrhebel in der Sperrstellung befindet.

## Patentansprüche

1. Hakenkupplung mit einem eine Einhaköffnung (14) aufweisenden Hakenkörper (12) und einer Verschlussklinke (16), welche verstellbar ist zwischen einer Offenstellung, in welcher die Einhaköffnung (14) zumindest soweit offen ist, dass eine Zugöse an dem Hakenkörper (12) zur Herstellung einer Formschlussverbindung mit diesem einhakbar ist, und einer Verschlussstellung, in weicher die Einhaköffnung (14) zumindest soweit versperrt ist, dass eine an dem Hakenkörper (12) eingehakte Zugöse zum Verbleib an diesem gesichert ist, wobei die Hakenkupplung (10) weiter umfasst:
einen Sperrhebel (26), welcher schwenkbar ist zwischen einer Sperrstellung, in welcher er eine Verstellung der Verschlussklinke (16) von der Verschlussstellung zur Offenstellung hin sperrt, und einer Freigabestellung, in welcher er eine Verstellung der Verschlussklinke (16) von der Verschlussstellung zur Offenstellung hin gestattet, sowie
eine Auslöseeinrichtung (36), welche in ihrer Grundstellung dann, wenn der Sperrhebel (26) sich in der Sperrstellung befindet, eine Verlagerung des Sperrhebels (26) in die Freigabestellung hemmt, und welche bei Betätigung aus ihrer Grundstellung heraus eine Verlagerung des Sperrhebels (26) in die Freigabestellung erlaubt, wobei
die Auslöseeinrichtung (36) ein an der Verschlussklinke (16) oder vorzugsweise am Hakenkörper (12) oder an einem starr mit Hakenkörper (12) oder Verschlussklinke (16) verbundenen Bauteil beweglich gelagertes Auslösebauteil (38) aufweist, welches beweglich ist zwischen der Grundstellung und einer Auslösestellung, in welcher es die Verlagerung des Sperrhebels (26) in die Freigabestellung erlaubt, wobei das Auslösebauteil (38) zwischen der Grundstellung und der Auslösestellung verschwenkbar an der Verschlussklinke (16) oder vorzugsweise am Hakenkörper (12) vorgesehen ist, **dadurch gekennzeichnet, dass** der Sperrhebel (26) und das Auslösebauteil (38) gegensinnig verschwenkbar sind.

2. Hakenkupplung nach Anspruch 1,
**dadurch gekennzeichnet, dass** das Auslösebauteil (38) durch Krafteinwirkung in die Grundstellung vorgespannt ist.

3. Hakenkupplung nach Anspruch 2,
**dadurch gekennzeichnet, dass** sie wenigstens eine Auslösebauteil-Vorspannfeder (48) umfasst, welche einenends am Auslösebauteil (38) und andernends an einem Bauteil aus Sperrhebel (26), Hakenkörper (12) oder Verschlussklinke (16), vorzugsweise an der Verschlussklinke (16) abgestützt ist.

4. Hakenkupplung nach einem der vorhergehenden Ansprüche,
**dadurch gekennzeichnet, dass** das Auslösebauteil (38) einen Verriegelungsabschnitt (42) aufweist, welcher in der Grundstellung des Auslösebauteils (38) in Gegenüberstellung zu oder in Anlage an einem Verriegelungsgegenabschnitt (44) des Sperrhebels (26) angeordnet ist.

5. Hakenkupplung nach Anspruch 4,
**dadurch gekennzeichnet, dass** in der Auslösestellung der Verriegelungsabschnitt (42) vom Verriegelungsgegenabschnitt (44) entfernt ist.

6. Hakenkupplung nach Anspruch 4 oder 5,
**dadurch gekennzeichnet, dass** in der Grundstellung des Auslösebauteils (38) eine Selbsthemmung zwischen Sperrhebel (26) und Auslösebauteil (38) derart erreicht ist, dass eine Bewegung des Sperrhebels (26) von der Sperrstellung zur Freigabestellung hin keine Bewegung des Auslösebauteils (38) von der Grundstellung zur Auslösestellung hin bewirkt.

7. Hakenkupplung nach einem der vorhergehenden Ansprüche,
**dadurch gekennzeichnet, dass** der Sperrhebel (26) an seinem Sperrhebel-schwenkachsennäheren Längsende teilrotationssymmetrisch bezüglich der Sperrhebel-Schwenkachse (24) ausgeführt ist und dieses Längsende von einer im Wesentlichen komplementären Ausnehmung (58) in dem den Sperrhebel lagernden Bauteil über einen vorbestimmten Winkelbereich hinweg, vorzugsweise ca. 140° -180°, umgeben ist.

8. Hakenkupplung nach einem der vorhergehenden Ansprüche,
**dadurch gekennzeichnet, dass** das Auslösebauteil (38) eine Mitnehmereinrichtung (50) aufweist, welche zumindest während eines Abschnitts einer Verschwenkbewegung des Auslösebauteils (38) von der Grundstellung weg den Sperrhebel (26) von der Sperrstellung in Richtung zur Freigabestellung hin mitnimmt.

9. Hakenkupplung nach Anspruch 8,
**dadurch gekennzeichnet, dass** der Sperrhebel (26) durch das Auslösebauteil (28) vermittels der Mitnehmereinrichtung (50) von der Sperrstellung in die Freigabestellung verlagerbar ist.

10. Hakenkupplung nach Anspruch 8 oder 9, unter Einbeziehung des Anspruchs 3,
**dadurch gekennzeichnet, dass** die Mitnehmereinrichtung (50) als auslösebauteilseitiges Vorspannfederlager dient.

11. Hakenkupplung nach einem der Ansprüche 8 bis 10,
**dadurch gekennzeichnet, dass** die Mitnehmereinrichtung (50) eine Gleitfläche aufweist, welche zumindest während eines Abschnitts der Verschwenkbewegung des Auslösebauteils (38) von der Grundstellung in die Auslösestellung in Gleitanlageeingriff an eine Anlagekontur (60) des Sperrhebels (26) gelangt.

12. Hakenkupplung nach einem der vorhergehenden Ansprüche,
**dadurch gekennzeichnet, dass** die Verschlussklinke (16) schwenkbar vorgesehen ist, wobei Verschlussklinke (16) und Auslösebauteil (38) um eine gemeinsame Schwenkachse (18) schwenkbar sind.

13. Hakenkupplung nach einem der vorhergehenden Ansprüche,
**dadurch gekennzeichnet, dass** der Sperrhebel (26) zur Sperrstellung hin vorgespannt ist.

14. Hakenkupplung nach einem der vorhergehenden Ansprüche,
**dadurch gekennzeichnet, dass** der Sperrhebel (26) in der Verschlussklinke (16) zwischen Sperrstellung und Freigabestellung verlagerbar gelagert ist.

15. Hakenkupplung nach einem der vorhergehenden Ansprüche,
**dadurch gekennzeichnet, dass** die Verschlussklinke (16) einen mechanischen Anschlag (62) umfasst, welcher den Verlagerungsbereich des Sperrhebels (26) nahe der Freigabestellung gegen eine Bewegung von der Sperrstellung weg begrenzt.

16. Hakenkupplung nach einem der vorhergehenden Ansprüche,
**dadurch gekennzeichnet, dass** eine Gegenanschlagfläche (30) des Hakenkörpers (12), mit welcher eine Anschlagfläche (28) des Sperrhebels (26) in dessen Sperrstellung in Anlageeingriff gelangt, auch zur Anlage eines Anlageabschnitts (64) der Verschlussklinke (16) daran ausgebildet ist, und zwar derart, dass die Gegenanschlagfläche (30) die Verstellbarkeit der Verschlussklinke (16) nahe der Offenstellung in Richtung von der Verschlussstellung weg begrenzt.

## Claims

1. A hook coupling with a hook body (12), which has a hook-in opening (14), and with a closure latch (16) which can be adjusted between an open position, in which the hook-in opening (14) is at least open to such an extent that a drawbar eye can be hooked in at the hook body (12), to establish a positive connection therewith, and a closed position in which the hook-in opening (14) is closed at least to such an extent that a drawbar eye hooked in at the hook body (12) is secured to stay thereon, the hook coupling (10) furthermore comprising:
a blocking lever (26) which is pivotable between a blocking position, in which it blocks an adjustment of the closure latch (16) from the closed position towards the open position, and a release position in which it permits an adjustment of the closure latch (16) from the closed position towards the open position, and
a triggering device (36) which, in its basic position, whenever the blocking lever (26) is in the blocking position, prevents displacement of the blocking lever (26) into the release position, and which, when actuated out of its basic position, permits displacement of the blocking lever (26) into the release position,
the triggering device (36) comprising a triggering component (38) which is mounted moveably on the closure latch (16) or preferably on the hook body (12) or on a component connected rigidly to the hook body (12) or the closure latch (16), which triggering component is moveable between the basic position and a triggering position in which it permits the displacement of the blocking lever (26) into the release position, the triggering component (38) being provided on the closure latch (16) or preferably on the hook body (12) so that it is pivotable between the basic position and the triggering position,
**characterised in that** the blocking lever (26) and the triggering component (38) are pivotable in opposite directions.

2. A hook coupling according to claim 1,
**characterised in that** the triggering component (38) is pretensioned into the basic position by action of a force.

3. A hook coupling according to claim 2,
**characterised in that** it comprises at least one triggering component pretensioning spring (48) which is supported at one end on the triggering component (38) and at the other end on one of the following components: blocking lever (26), hook body (12), or closure latch (16), preferably on the closure latch (16).

4. A hook coupling according to any one of the preceding claims,
**characterised in that** the triggering component (38) has a locking portion (42) which is arranged, in the basic position of the triggering component (38), opposed to or resting on a locking counter-portion (44) of the blocking lever (26).

5. A hook coupling according to claim 4,
**characterised in that** in the triggering position the locking portion (42) is remote from the locking counter-portion (44).

6. A hook coupling according to claim 4 or claim 5,
**characterised in that** in the basic position of the triggering component (38) self-locking is achieved between the blocking lever (26) and the triggering component (38) such that movement of the blocking lever (26) from the blocking position towards the release position does not cause any movement of the triggering component (38) from the basic position towards the triggering position.

7. A hook coupling according to any one of the preceding claims,
**characterised in that** the blocking lever (26) is designed so as to be partly rotationally symmetrical relative to the blocking lever pivoting axis (24) at its longitudinal end that is closer to the blocking lever pivoting axis and this longitudinal end is surrounded over a predetermined angular range, preferably approximately 140° -180°, by a substantially complementary recess (58) in the component that mounts the blocking lever.

8. A hook coupling according to any one of the preceding claims,
**characterised in that** the triggering component (38) exhibits a driving device (50) which, at least during a portion of a pivoting movement of the triggering component (38) away from the basic position, drives the blocking lever (26) from the blocking position in the direction towards the release position.

9. A hook coupling according to claim 8,
**characterised in that** the blocking lever (26) can be displaced by the triggering component (28) from the blocking position into the release position by means of the driving device (50).

10. A hook coupling according to claim 8 or claim 9, taking account of claim 3,
**characterised in that** the driving device (50) serves as a pretensioning spring bearing on the triggering component side.

11. A hook coupling according to any one of claims 8 to 10,
**characterised in that** the driving device (50) exhibits a sliding face which, at least during a portion of the pivoting movement of the triggering component (38) from the basic position into the triggering position, arrives in sliding contact engagement with a contact contour (60) of the blocking lever (26).

12. A hook coupling according to any one of the preceding claims,
**characterised in that** the closure latch (16) is provided pivotably, the closure latch (16) and the triggering component (38) being pivotable about a joint pivoting axis (18).

13. A hook coupling according to any one of the preceding claims,
**characterised in that** the blocking lever (26) is pretensioned towards the blocking position.

14. A hook coupling according to any one of the preceding claims,
**characterised in that** the blocking lever (26) is mounted in the closure latch (16) so as to be displaceable between the blocking position and the release position.

15. A hook coupling according to any one of the preceding claims,
**characterised in that** the closure latch (16) comprises a mechanical stop (62) which limits the displacement range of the blocking lever (26) close to the release position against movement away from the blocking position.

16. A hook coupling according to any one of the preceding claims,
**characterised in that** a counter stop face (30) of the hook body (12), with which face a stop face (28) of the blocking lever (26) is brought into contact engagement in the blocking position of the latter, is also designed for a contact portion (64) of the closure latch (16) to rest on, to be precise such that the counter stop face (30) limits the adjustability of the closure latch (16) close to the open position in the direction away from the closed position.

## Revendications

1. Couplage par crochet avec un corps de crochet (12) présentant une ouverture d'accrochage (14) et un cliquet de fermeture (16) qui peut être réglé entre une position ouverte, dans laquelle l'ouverture d'accrochage (14) est ouverte au moins jusqu'à ce qu'un anneau d'attelage puisse être accroché au corps de crochet (12) pour l'établissement d'une liaison positive avec celui-ci, et une position de fermeture, dans laquelle l'ouverture d'accrochage (14) est bloquée au moins jusqu'à ce qu'un anneau d'attelage accroché au corps de crochet (12) soit bloqué pour rester sur celui-ci, le couplage par crochet (10) comprenant en outre :
un levier d'arrêt (26) qui peut être pivoté entre une position de blocage, dans laquelle il bloque un réglage du cliquet de fermeture (16) de la position de fermeture à la position ouverte, et une position de libération, dans laquelle il autorise un réglage du cliquet de fermeture (16) de la position de fermeture à la position ouverte, ainsi que
un dispositif de déclenchement (36) qui bloque dans sa position de base si le levier d'arrêt (26) se trouve dans la position de blocage, un déplacement du levier d'arrêt (26) dans la position de libération et qui permet en cas d'actionnement depuis sa position de base, un déplacement du levier d'arrêt (26) dans la position de libération,
le dispositif de déclenchement (36) présentant un composant de déclenchement (38) logé de manière mobile sur le cliquet de fermeture (16) ou de préférence sur le corps de crochet (12) ou sur un composant relié de manière rigide au corps de crochet (12) ou cliquet de fermeture (16), qui est mobile entre la position de base et une position de déclenchement, dans laquelle il permet le déplacement du levier d'arrêt (26) dans la position de libération, le composant de déclenchement (38) étant prévu de manière pivotante entre la position de base et la position de déclenchement sur le cliquet de fermeture (16) ou de préférence sur le corps de crochet (12),
**caractérisé en ce que** le levier d'arrêt (26) et le composant de déclenchement (38) peuvent être pivotés en sens inverse.

2. Couplage par crochet selon la revendication 1,
**caractérisé en ce que** le composant de déclenchement (38) est précontraint sous l'effet de la force dans la position de base.

3. Couplage par crochet selon la revendication 2,
**caractérisé en ce qu'**il comporte au moins un ressort de précontrainte de composant de déclenchement (48) qui est appuyé au niveau d'une extrémité contre le composant de déclenchement (38) et au niveau de l'autre extrémité contre l'un des composants suivants, le levier d'arrêt (26), le corps de crochet (12) ou le cliquet de fermeture (16), de préférence contre le cliquet de fermeture (16).

4. Couplage par crochet selon l'une quelconque des revendications précédentes,
**caractérisé en ce que** le composant de déclenchement (38) présente une section de verrouillage (42) qui est disposée dans la position de base du composant de déclenchement (38) en parallèle ou en appui contre une section antagoniste de verrouillage (44) du levier d'arrêt (26).

5. Couplage par crochet selon la revendication 4,
**caractérisé en ce que** dans la position de déclenchement, la section de verrouillage (42) est éloignée de la section antagoniste de verrouillage (44).

6. Couplage par crochet selon la revendication 4 ou 5,
**caractérisé en ce que** dans la position de base du composant de déclenchement (38), le levier d'arrêt (26) et le composant de déclenchement (38) sont bloqués automatiquement de telle manière qu'un déplacement du levier d'arrêt (26) de la position de blocage à la position de libération ne provoque aucun déplacement du composant de déclenchement (38) de la position de base à la position de déclenchement.

7. Couplage par crochet selon l'une quelconque des revendications précédentes,
**caractérisé en ce que** le levier d'arrêt (26) est réalisé sur son extrémité longitudinale plus proche de l'axe de pivotement du levier d'arrêt de manière partiellement symétrique en rotation par rapport à l'axe de pivotement du levier d'arrêt (24) et cette extrémité longitudinale est entourée par un évidement (58) essentiellement complémentaire dans le composant logeant le levier d'arrêt au-delà d'une plage angulaire prédéterminée, comprise de préférence environ entre 140 et 180°.

8. Couplage par crochet selon l'une quelconque des revendications précédentes,
**caractérisé en ce que** le composant de déclenchement (38) présente un dispositif d'entraînement (50) qui entraîne le levier d'arrêt (26) de la position de blocage en direction de la position de libération, au moins pendant une section d'un mouvement de pivotement du composant de déclenchement (38) de la position de base.

9. Couplage par crochet selon la revendication 8,
**caractérisé en ce que** le levier d'arrêt (26) peut être déplacé par le composant de déclenchement (28) au moyen du dispositif d'entraînement (50) de la position de blocage à la position de libération.

10. Couplage par crochet selon la revendication 8 ou 9 en intégrant la revendication 3,
**caractérisé en ce que** le dispositif d'entraînement (50) sert d'appui au ressort de précontrainte côté composant de déclenchement.

11. Couplage par crochet selon l'une quelconque des revendications 8 à 10,
**caractérisé en ce que** le dispositif d'entraînement (50) présente une surface de glissement qui parvient en engagement d'appui glissant sur un contour d'appui (60) du levier d'arrêt (26) au moins pendant une section du mouvement de pivotement du composant de déclenchement (38) de la position de base à la position de déclenchement.

12. Couplage par crochet selon l'une quelconque des revendications précédentes,
**caractérisé en ce que** le cliquet de fermeture (16) est prévu de manière à pouvoir pivoter, le cliquet de fermeture (16) et le composant de déclenchement (38) pouvant être pivotés autour d'un axe de pivotement commun (18).

13. Couplage par crochet selon l'une quelconque des revendications précédentes,
**caractérisé en ce que** le levier d'arrêt (26) est précontraint vers la position de blocage.

14. Couplage par crochet selon l'une quelconque des revendications précédentes,
**caractérisé en ce que** le levier d'arrêt (26) est logé de manière mobile dans le cliquet de fermeture (16) entre la position de blocage et la position de libération.

15. Couplage par crochet selon l'une quelconque des revendications précédentes,
**caractérisé en ce que** le cliquet de fermeture (16) comporte une butée mécanique (62) qui limite la zone de déplacement du levier d'arrêt (26) près de la position de libération contre tout déplacement de la position de blocage.

16. Couplage par crochet selon l'une quelconque des revendications précédentes,
**caractérisé en ce qu'**une surface de butée antagoniste (30) du corps de crochet (12), avec laquelle une surface de butée (28) du levier d'arrêt (26) parvient en engagement d'appui dans sa position de blocage, est réalisée aussi pour l'appui d'une section d'appui (64) du cliquet de fermeture (16) dessus et ce de telle manière que la surface de butée antagoniste (30) limite la possibilité de réglage du cliquet de fermeture (16) près de la position ouverte en direction de la position de fermeture.
